**Europäisches Patentamt**

**European Patent Office**

**Office européen des brevets**

(19)

(11) Veröffentlichungsnummer : **0 080 559**
**B1**

(12) **EUROPÄISCHE PATENTSCHRIFT**

(45) Veröffentlichungstag der Patentschrift :
**12.02.86**

(51) Int. Cl.⁴ : **H 02 B  1/04**

(21) Anmeldenummer : **82107696.5**

(22) Anmeldetag : **23.08.82**

(54) **Drucktaster für Schalttafeln.**

(30) Priorität : **13.11.81 DE 3145070**

(43) Veröffentlichungstag der Anmeldung :
**08.06.83 Patentblatt 83/23**

(45) Bekanntmachung des Hinweises auf die Patenterteilung : **12.02.86 Patentblatt 86/07**

(84) Benannte Vertragsstaaten :
**BE CH DE FR GB IT LI NL SE**

(56) Entgegenhaltungen :
**DE-A- 2 430 707**
**FR-A-   431 834**
**GB-A- 1 055 945**
**US-A- 3 742 807**

(73) Patentinhaber : **Rafi GmbH & Co Elektrotechnische**
**Spezialfabrik**
**Ravensburger Strasse 128-134**
**D-7981 Berg bei Ravensburg (DE)**

(72) Erfinder : **Wasmeier, Albert**
**Schenk-Konrad-Weg 6**
**D-7981 Fronreute 1 Blitzenreute (DE)**

(74) Vertreter : **Engelhardt, Guido, Dipl.-Ing.**
**Montafonstrasse 35 Postfach 1350**
**D-7990 Friedrichshafen 1 (DE)**

**Beschreibung**

Die Erfindung bezieht sich auf einen Drucktaster für Schalttafeln, umfassend ein in eine entsprechende Ausnehmung der Schalttafel einzusetzendes und mit dieser zu verbindendes Drucktastergehäuse und ein Tastenelement zur Betätigung von Kontaktgliedern, das verschiebbar oder drehbar in dem Drucktastergehäuse gehalten ist, wobei das Drucktastergehäuse mit Rastnocken versehen ist, die durch Federkraft begrenzt radial nach außen bewegbar sind und dabei zur Befestigung des Drucktasters an der Schalttafel diese in Einbaulage hintergreifen.

Ein Drucktaster dieser Art ist durch die GB-A-1 055 945 bekannt. Das Drucktastergehäuse wird hierbei jedoch nur durch die den Rastnocken innewohnende geringe Federkraft gehalten, die an dem Drucktastergehäuse angeformt und somit lediglich nach außen verschwenkbar sind. Da demnach keine Anpreßkraft in Richtung der Schalttafeln wirksam ist, ist eine sichere Halterung oftmals nicht gegeben. Vor allem aber ist bei dieser Ausgestaltung von Nachteil, daß das Drucktastergehäuse nur bei Schalttafeln, die entsprechend der Ausbildung der Rastnocken bemessen sind, zu befestigen ist, das Drucktastergehäuse ist daher entsprechend zu gestalten und bei Schalttafeln unterschiedlicher Stärke nicht einsetzbar. Auch ist eine feuchtigkeitsdichte Verbindung auf diese Weise nicht zu bewerkstelligen.

Des weiteren ist durch die DE-A-2 430 707 eine Haltevorrichtung für in Blenden einzusetzende Einbaugeräte bekannt. Auch bei dieser Haltevorrichtung sind Rastglieder vorgesehen, die nach außen verschwenkbar sind, um dabei zur Befestigung des Einbaugerätes in der Blende diese zu hintergreifen. Das Eingabaugerät wird somit wiederum nur durch die den Rastgliedern innnewohnende Kraft gehalten.

Aufgabe der Erfindung ist es demnach, den Drucktaster der vorgenannten Gattung derart zu verbessern, daß dieser, ohne daß konstruktive Änderungen vorzusehen sind, bei unterschiedlich stark bemessenen Schalttafeln problemlos verwendbar und daß stets eine feuchtigkeitsdichte Verbindung zu bewerkstelligen ist. Außerdem soll die Befestigung des Drucktasters in sehr kurzer Zeit von nur einer Person und von einer Seite der Schalttafel aus vorzunehmen sein.

Gemäß der Erfindung wird diese Aufgabe gelöst durch eine derartige Ausbildung und Anordnung der Rastnocken an dem Drucktastergehäuse, daß diese nach Einsetzen des Drucktastergehäuses in die Ausnehmung der Trägerplatte durch Betätigung des Tastenelementes entgegen einer in Längsrichtung des Drucktastergehäuses auf sie wirkenden Federkraft durch die Ausnehmung der Schalttafel hindurch verschiebbar sind.

Vorteilhaft ist es hierbei, die Rastnocken jeweils in Form eines zweischenkligen Winkelhebels auszubilden, der im Eckbereich verschwenkbar gelagert ist und dessen nach innen gerichteter Schenkel von der Kraft einer vorzugsweise allen Rastnocken gemeinsamen Feder beaufschlagt und dessen anderer Schenkel mit der Schalttafel verrastbar ist.

Außerdem ist es angebracht, die Rastnocken jeweils in einer achsparallel verlaufenden, in das Tastergehäuse eingearbeiteten Freisparung verschiebbar einzusetzen und zu deren verschwenkbarer Lagerung an diesen senkrecht zur Längsachse des Drucktasters gerichtete Zapfen ein- oder beidseitig anzuformen, und in die die Freisparungen begrenzenden Wände Längsnuten einzuarbeiten, in denen die Zapfen verschiebbar und drehbar gehalten sind.

Zur verschwenkbaren Lagerung der Rastnocken können aber auch nach einer andersartigen Ausgestaltung an diesen ein- oder beidseitig jeweils zwei mit Abstand zueinander angeordnete Vorsprünge angeformt werden, die auf den einander zugekehrten Seiten kovexe Flächen aufweisen zwischen die ein an dem Tastergehäuse angeformter, in die Freisparung ragender Längssteg eingreift.

Um ein rasches Verschwenken der Rastnocken nach dem Durchfahren der Schalttafel zu bewerkstelligen, kann des weiteren vorgesehen werden, auf die in Längsrichtung des Drucktasters verlaufenden Schenkel der Rastnocken eine achssenkrecht gerichtete Federkraft einwirken zu lassen.

Zur Begrenzung der Schwenkbewegung der Rastnocken ist es des weiteren zweckmäßig, diese mit einem Anschlag zu versehen, der mit einer an dem Tastergehäuse vorgesehenen Anschlagfläche zusammenwirkt, wobei der Anschlag aus einem achsparallel zu dem Zapfen seitlich abstehenden Vorsprung bestehen kann und die die Rastnocken aufnehmenden Freisparungen zur Schaffung der Anschlagflächen abgestuft sein können.

Die Rastnocken können auch am Rande eines ein- oder mehrteiligen senkrecht zur Längsachse des Drucktastergehäuses dehnbaren Rahmens ausgebildet sein.

Hierbei ist es angebracht, den Rahmen mit einer in Richtung der Rastnasen federnden Zone auszustatten oder die Rastnasen von einer senkrecht zur Längsachse des Drucktasters wirkenden Federkraft zu beaufschlagen.

Des weiteren ist es vorteilhaft, das Tastenelement zur Verschiebung der Rastnocken durch die Ausnehmung der Schalttafel mit einer durch einen Absatz gebildeten Betätigungsfläche zu versehen, die zur Längsachse des Drucktasters derart geneigt verläuft, daß die Rastnocken nach dem Durchwandern der Ausnehmung der Schalttafel leicht radial ausschwenkbar sind.

Die der Verstellbewegung des Tastenelementes entgegenwirkende Feder sollte als allen Rastnocken gemeinsame Druck- oder Blattfeder ausgebildet sein, die sich am Drucktastergehäuse abstützt ist, wobei sie in dem durch die Betätigungsfläche gebildeten Freiraum angeordnet sein kann.

Bei einem Drucktaster mit verschwenkbar gelagerten Rastnocken ist es ferner angebracht, die auf diese einwirkende Feder unmittelbar oder über ein Zwischenglied mit Abstand zu der Schwenkachse an den nach innen gerichteten Schenkeln der Rastnocken abzustützen, so daß dadurch die Schwenkbewegung unterstützt oder bewerkstelligt wird.

Bei einem Drehschalter sollte die mit den Rastnocken zusammenwirkende Betätigungsfläche schraubenlinienförmig verlaufend ausgebildet sein.

Um das Eindringen von Feuchtigkeit hinter die Schalttafel zu verhindern, kann zwischen dem Tastergehäuse und der Schalttafel auf deren Außenseite eine Dichtung eingespannt sein.

Der gemäß der Erfindung ausgebildete Drucktaster ermöglicht es, diesen in äußerst kurzer Zeit auf sehr einfache Weise an einer Schalttafel zu montieren, und zwar ist dazu lediglich eine Person erforderlich, die den Drucktaster von vorn in eine entsprechende Ausnehmung der Schalttafel einführt. Sind nämlich die Rastnocken durch das Tastenelement entgegen Federkraft in Längsrichtung des Drucktastergehäuses verschiebbar angeordnet, so kann der Drucktaster durch eine Verrastung mit der Schalttafel fest verbunden werden. Nach dem Einsetzen des Drucktastergehäuses ist dazu lediglich das Tastenelement derart zu betätigen, daß die Rastnocken hinter der Schalttafel nach außen schwenken können bzw. senkrecht zur Längsachse verschoben werden, und schon ist der Drucktaster mit der Schalttafel verspannt.

Durch die Kraft der auf die Rastnocken einwirkenden Feder werden diese dabei, sobald eine Schwenk- oder Schiebebewegung nach außen möglich ist, um die Zapfen gedreht bzw. nach außen geschoben, so daß sich diese mit dem einen Schenkel oder mit einer Rastnase an der Rückseite der Schalttafel anlegen. Und da die Rastnocken weiterhin von der Kraft der in Längsrichtung des Drucktasters wirkenden Feder beaufschlagt sind, ist der Drucktaster fest in der Schalttafel arretiert. Bei dieser Art der Befestigung ist ferner von Vorteil, daß diese unabhängig von der jeweiligen Schalttafelstärke wirksam ist. Eine Anpassung ist somit nicht erforderlich, vielmehr ist lediglich das Tastenelement mehr oder weniger tief in das Tastergehäuse einzudrücken, um das Ausschwenken oder Ausfahren der Rastnocken zu ermöglichen.

Die Bestückung einer Schalttafel kann somit von einer Person in einem Bruchteil der bisher dafür benötigten Zeit vorgenommen werden, da diese nur den vormontierten Drucktaster in eine Ausnehmung der Schalttafel einzusetzen hat und sodann das Tastenelement drücken muß, um die Verriegelung zu bewerkstelligen. Die Montagekosten können daher gegenüber der bisherigen Verfahrensweise in einem sehr erheblichen Maße reduziert werden, auch ist die Handhabung äußerst einfach, so daß selbst Hilfspersonen mit der Montage und Demontage, die ebenfalls in einfacher Weise vorzunehmen ist, betraut werden können. Und da der Bauaufwand gering ist, sind die Drucktaster auch wirtschaftlich herstellbar.

In der Zeichnung sind einige Ausführungsbeispiele des gemäß der Erfindung ausgebildeten Drucktasters dargestellt und nachfolgend im einzelnen erläutert. Hierbei zeigen:

Figur 1 den in eine Schalttafel eingesteckten Drucktaster zu Beginn der Montage, in einem Axialschnitt,

Figur 2 den Drucktaster nach Fig. 1 mit bis zur Anlage an den Rastnocken niedergedrücktem Tastenelement,

Figur 3 den Drucktaster nach Fig. 1 mit bis zur Freigabe der Rastnocken niedergedrücktem Tastenelement,

Figur 4 den in Fig. 1 umrandeten Teil des Drucktasters in vergrößerter Darstellung,

Figur 5 einen achssenkrechten Schnitt durch den Drucktaster nach Fig. 1,

Figur 6 einen Auschnitt aus dem Tastergehäuse nach Fig. 1 einer andersartigen Lagerung der Rastnocken und

Figur 7 einen achssenkrechten Schnitt durch einen rechteckig ausgebildeten in eine Schalttafel eingesetzten Drucktaster, der mit verschiebbaren Rastnocken versehen ist.

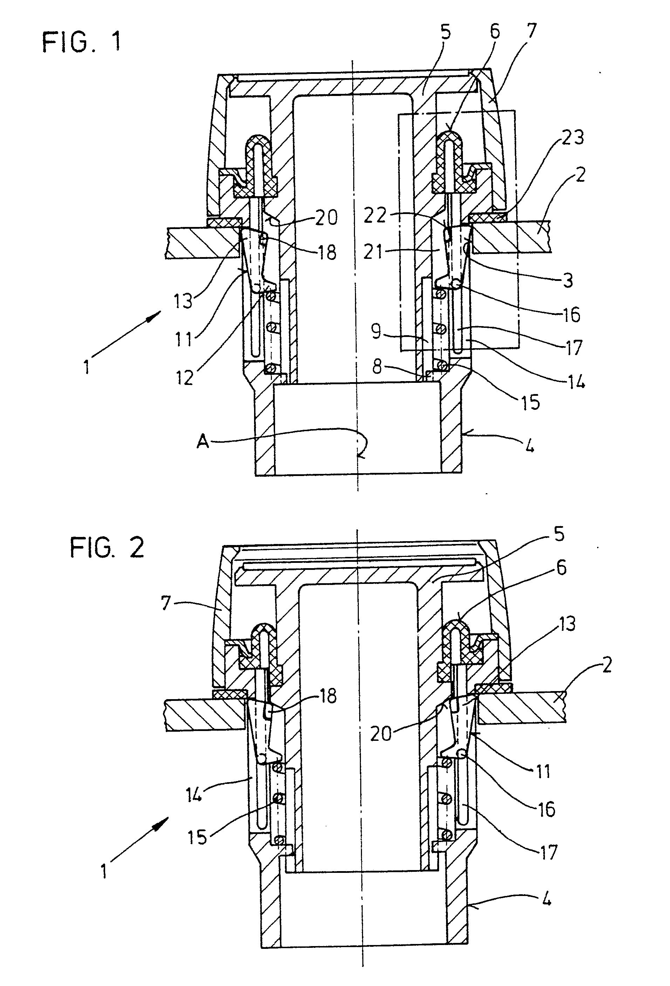

Der in den Fig. 1 bis 3 dargestellte und mit 1 bezeichnete Drucktaster ist in einer als Bohrung ausgebildeten Ausnehmung 3 einer Schalttafel 2 angeordnet und besteht aus einem Tastergehäuse 4 und einem in diesem axial verschiebbar geführten Tastenelement 5, das über eine Rollmembran 6 mit dem Tastergehäuse 4 verbunden ist. Mittels einer Tastenkappe 7, die ebenfalls an dem sich mit einem Bund an der Schalttafel 2 abstützenden Tastergehäuse 4 befestigt ist, ist das Tastenelement 5 in Position gehalten. Außerdem ist eine Verdrehsicherung in Form zweier an dem Tastergehäuse 4 angeformter Vorsprünge 8, die in in das Tastenelement 5 eingearbeitete Nuten 9 eingreifen, vorgesehen.

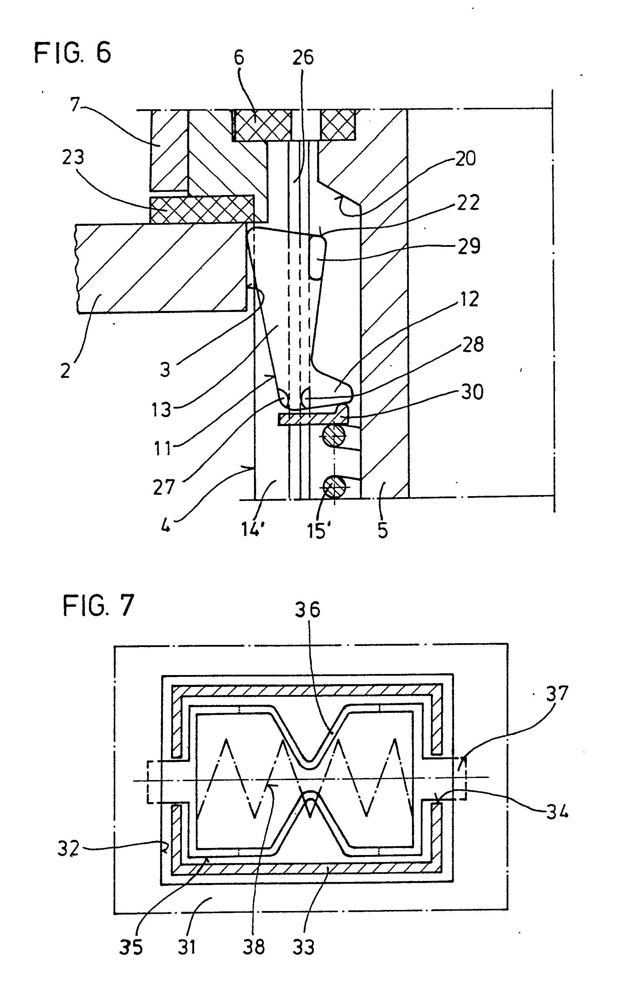

Zur Verspannung des Tastenelementes 1 mit der Schalttafel 2 dienen zwei einander gegenüberliegend angeordnete Rastnocken 11, die verschiebbar und begrenzt verschwenkbar in dem Tastergehäuse 4 angeordnet sind. Dazu sind in diesem parallel zur Längsachse A des Drucktasters 1 verlaufende Freisparungen 14 vorgesehen, und die diese begrenzenden Seitenwände sind mit Längsnuten 17 versehen, in die an den Rastnocken 11 angeformte Zapfen 16 eingreifen. Außerdem sind die Freisparungen 14, wie dies der Fig. 5 entnommen werden kann, abgestuft ausgebildet, so daß Anschlagflächen 19 geschaffen sind, an denen an den Rastnocken 11 in Form von Vorsprüngen angebrachte Anschläge 18 zur Anlage kommen können.

Die Rastnocken 11 sind als zweischenklige Hebel ausgebildet, auf deren nach innen gerichteten Schenkeln 12 mit Abstand zu der durch die Zapfen 16 gebildeten Schwenkachse eine Druckfeder 15 einwirkt, die an dem Tastergehäuse 4 abgestützt ist. Der in Richtung des Tastenelementes 5 verlaufende Schenkel 13 ist durch diese betätigbar, die dazu mit einer durch einen Absatz gebildete Betätigungsfläche 20 versehen ist. Die Druckfeder 15 ist in dem durch die Betätigungsfläche 20 geschaffenen Freiraum 21 angeordnet.

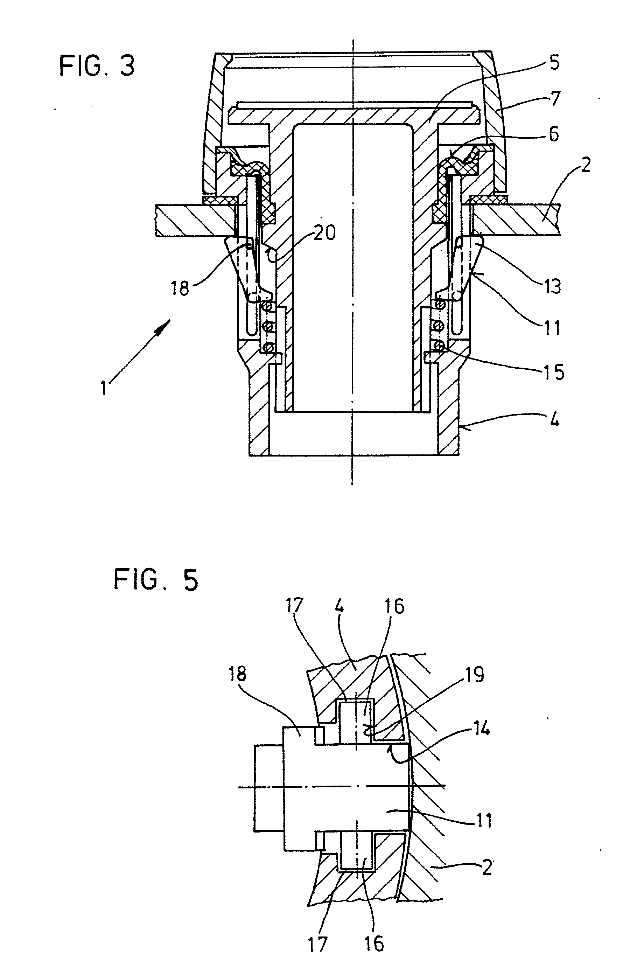

Die Montage des Drucktasters 1 erfolgt in der Weise, daß dieser zunächst in die Bohrung 3 der Schalttafel 2 eingesteckt wird, wie dies in Fig. 1 gezeigt ist. Sodann wird das Tastenelement 5 niedergedrückt. Nach Überwindung des freien Zwischenraumes zwischen der Betätigungsfläche 20 und dem mit einer Gegenfläche 22 versehenen Schenkel 13 liegen beide Flächen aneinander an (Fig. 2). Wird jetzt das Tastenelement 5 weiterbewegt, so werden die Rastnocken 11 entgegen der Kraft der Feder 15 in Richtung der Längsachse A verschoben, und zwar so lange, bis diese hinter der Schalttafel 2 um die Zapfen 16 bis zur Anlage der Anschläge 18 an den Anschlagflächen 19 nach außen schwenken können (Fig. 3). Durch die auf die Schenkel 12 einwirkende Feder 15 ist somit der Drucktaster 1 fest mit der Schalttafel 2 verspannt, da die Schenkel 13 durch die Kraft der exzentrisch auf die Schenkel 12 einwirkenden Feder 15 gegen die Rückwand der Schalttafel 2 gepreßt werden.

Die Rückführung des Tastenelementes 5 wird, sobald dieses losgelassen wird, durch die Rollmembran 6 bewerkstelligt. Zur Montage des Drucktasters 1 an der Schalttafel 2 sind somit lediglich zwei Arbeitsgänge notwendig, nämlich es ist dieser in die Bohrung 3 einzusetzen und es ist dessen Tastenelement 5 niederzudrücken.

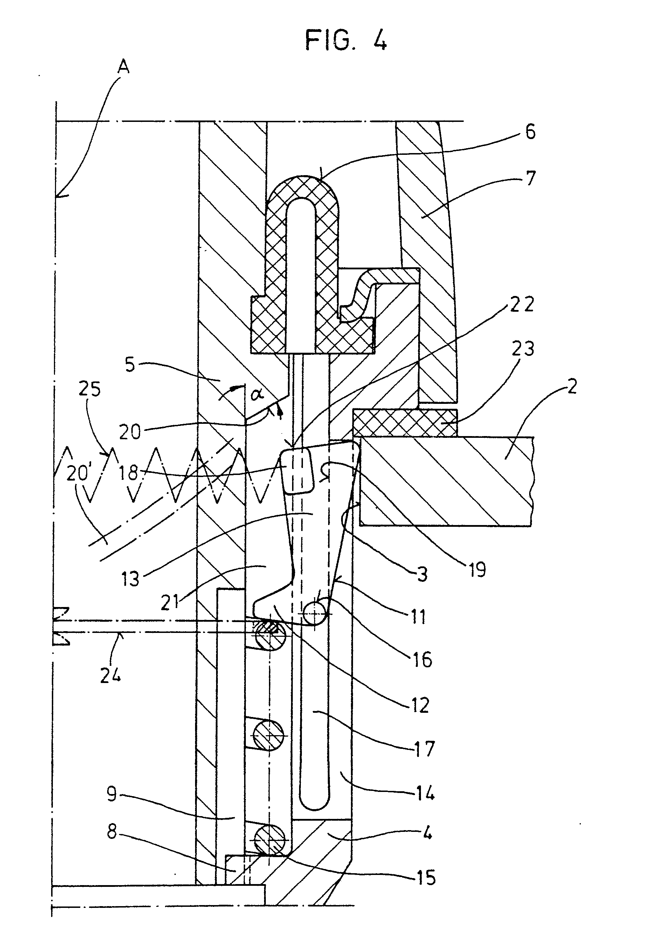

Dem vergrößerten Ausschnitt in Fig. 4 ist zu entnehmen, daß die Betätigungsfläche 20 unter einem Winkel α zur Längsachse A des Drucktasters 1 geneigt ist, und zwar ist der Winkel α derart gewählt, daß der Rastnocken 11 sofort nach außen schwenken kann, wenn dieser nicht mehr an der Wand der Bohrung 3 der Schalttafel 2 geführt ist. Die Verrastung des Drucktastergehäuses 4 mit der Schalttafel 2 erfolgt somit selbsttätig, da die Rastnocken 11 durch die Kraft der auf deren Schenkel 12 einwirkenden Feder 15, sobald der Schenkel 13 nicht mehr an der Wand der Bohrung 3 anliegt, sofort verschwenkt werden. Und durch die Kraft der Feder 15 ist auch sichergestellt, daß das Tastergehäuse 4, zwischen dem und der Schalttafel 2 auf deren Außenseite eine Dichtung 23 eingesetzt werden kann, fest mit der Schalttafel 2 verspannt ist. Die Materialstärke der Schalttafel 2 ist dabei ohne Bedeutung, da nur das Tastenelement 5 mehr oder weniger niederzudrücken ist, um die Verriegelung auszulösen.

Anstelle der Schraubendruckfeder 15 kann, wie dies in Fig. 4 strichpunktiert eingezeichnet ist, auch eine Blattfeder 24 vorgesehen werden, die am Drucktastergehäuse 4 abgestützt ist. Des weiteren kann in den Drucktaster 1, wie dies ebenfalls strichpunktiert eingezeichnet ist, eine Druckfeder 25 eingebaut werden, die senkrecht zur Längsachse A wirksam und an den Schenkeln 13 der Rastnocken 11 abgestützt ist, um diese, sobald diese nicht mehr an der Wandung der Bohrung 3 anliegen, nach außen zu drücken.

Bei Drehschaltern ist eine Betätigungsfläche 20' vorzusehen, die, wie dies in Fig. 4 des weiteren strichpunktiert eingezeichnet ist, schraubenlinienförmig anzuordnen ist.

Zur Demontage des Drucktasters 1 sind lediglich die Rastnocken 11 nach innen zu drücken, bis diese in die Bohrung 3 einschnappen. Werden nämlich die Rastnocken 11 geringfügig nach innen verschwenkt, so werden diese, sobald sie nicht mehr an der Rückwand der Schalttafel 2 anliegen, durch die Kraft der Feder 15 in die Bohrung 3 gedrückt und der Drucktaster 1 kann herausgenommen werden.

Gemäß Fig. 6 sind zur verschwenkbaren Lagerung der in einer Freisparung 14' des Tastergehäuses 4 angeordneten Rastnocken 11 an diesen auf jeder Seite zwei Vorsprünge 27 und 28 mit Abstand zueinander angebracht, zwischen denen jeweils ein an der Seitenwand der Freisparung 14' angeformter Längssteg 26 eingreift. Da die einander zugekehrten Flächen der Vorsprünge 27 und 28 konvex ausgebildet sind, können die Rastnocken 11 durch die Kraft der Feder 15', die über ein Zwischenstück 30 auf die nach innen gerichteten Schenkel 12 exzentrisch zu der Schwenkachse einwirkt, ebenfalls selbsttätig nach außen geschwenkt werden, sobald die Schenkel 13 nicht mehr in der Ausnehmung 3 der Schalttafel 2 geführt sind. Die Schwenkbewegung wird jedoch durch einen Anschlag 29 begrenzt, der an den Rastnocken 11 angeformt ist und sich an den in die Freisparung 14' ragenden Längssteg 26 anlegt.

Bei dem Ausführungsbeispiel nach Fig. 7 ist zur Verrastung des Tastergehäuses 33 eines rechteckig ausgebildeten Drucktasters mit einer Schalttafel 31 als Rastnocken ein zweiteiliger Rahmen 35 vorgesehen. Das Tastergehäuse 33 ist hierbei in einer Ausnehmung 32 der Schalttafel 31 eingesetzt und der Rahmen 35 weist zwei einander gegenüberliegend angeordnete Rastnasen 37 auf, die Ausnehmungen 34 des Tastergehäuses 33 durchgreifen und an der Rückseite der Schalttafel 31 durch die Kraft der in Längsrichtung des Drucktasters wirkenden nicht dargestellten Feder anliegen.

Damit das Tastergehäuse 33 in die Ausnehmung 32 eingesetzt werden kann, sind die Rastnasen 37 senkrecht zur Längsachse des Drucktasters verschiebbar. Dazu ist der Rahmen 35 mit federnden Zonen 36 versehen, so daß dessen äußere Teile zusammengeschoben werden können. Der Rahmen 35 kann aber auch, wie dies strichpunktiert dargestellt ist, aus zwei voneinander getrennten Teilen bestehen, zwischen denen eine Druckfeder 38 eingesetzt ist. Mittels des Rahmens 35 ist somit ebenfalls eine sichere Arretierung eines Drucktasters an einer Schalttafel unabhängig von deren Materialstärke in kurzer Zeit und auf einfache Weise zu bewerkstelligen.

**Patentansprüche**

1. Drucktaster (1) für Schalttafeln (2), umfassend ein in eine entsprechende Ausnehmung (3) der Schalttafel (2) einzusetzendes und mit dieser zu verbindendes Drucktastergehäuse (4 ; 33) und ein Tastenelement (5) zur Betätigung von Kontaktgliedern, das verschiebbar oder drehbar in dem Drucktastergehäuse gehalten ist, wobei das Drucktastergehäuse (4 ; 33) mit Rastnocken (11 ; 35) versehen ist, die durch Federkraft begrenzt radial nach außen bewegbar sind und dabei zur Befestigung des Drucktasters (1) an der Schalttafel (2) diese in Einbaulage hintergreifen, gekennzeichnet durch eine derartige Ausbildung und Anordnung der Rastnocken (11 ; 35) an dem Drucktastergehäuse (4 ; 33), daß diese nach Einsetzen des Drucktastergehäuses (4 ; 33) in die Ausnehmung (3) der Trägerplatte (2) durch Betätigung des Tastenelementes entgegen einer in Längsrichtung des Drucktastergehäuses (4 ; 33) auf sie wirkenden Federkraft durch die Ausnehmung (3) der Schalttafel (2) hindurch verschiebbar sind.

2. Drucktaster nach Anspruch 1, dadurch gekennzeichnet, daß die Rastnocken (11) jeweils in Form eines zweischenkligen Winkelhebels ausgebildet sind, der im Eckbereich verschwenkbar gelagert ist und dessen nach innen gerichteter Schenkel (12) von der Kraft einer — vorzugsweise allen Rastnocken gemeinsamen — Feder (15) beaufschlagt und dessen anderer Schenkel (13) mit der Schalttafel (2) verrastbar ist.

3. Drucktaster nach Anspruch 1 oder 2, dadurch gekennzeichnet, daß die Rastnocken (11) jeweils in einer achsparallel verlaufenden, in das Tastergehäuse (4) eingearbeiteten Freisparung (14) verschiebbar eingesetzt sind.

4. Drucktaster nach Anspruch 3, dadurch gekennzeichnet, daß zur verschwenkbaren Lagerung der Rastnocken (11) an diesen senkrecht zur Längsachse (A) des Drucktasters (1) gerichtete Zapfen (16) ein- oder beidseitig angeformt sind und daß in die die Freisparungen (14) begrenzenden Wände Längsnuten (17) eingearbeitet sind, in denen die Zapfen (16) verschiebbar und drehbar gehalten sind.

5. Drucktaster nach Anspruch 3, dadurch gekennzeichnet, daß zur verschwenkbaren Lagerung der Rastnocken (11) an diesen ein- oder beidseitig jeweils zwei mit Abstand zueinander angeordnete Vorsprünge (27, 28) angeformt sind, die auf den einander zugekehrten Seiten konvexe Flächen aufweisen zwischen die ein an dem Tastergehäuse (4) angeformter in die Freisparung (14') ragender Längssteg (26) eingreift.

6. Drucktaster nach einem der Ansprüche 2 bis 5, dadurch gekennzeichnet, daß auf die in Längsrichtung (A) des Tastergehäuses (1) verlaufenden Schenkel (13) der Rastnocken (11) eine achssenkrecht gerichtete Federkraft (Feder 25) einwirkt. (Fig. 4).

7. Drucktaster nach einem der Ansprüche 3 bis 6, dadurch gekennzeichnet, daß zur Begrenzung der Schwenkbewegung der Rastnocken (11) an diesen jeweils ein Anschlag (18 ; 29) angebracht ist, der mit einer an dem Tastergehäuse (4) vorgesehenen Anschlagfläche (19) bzw. einem in die die Rastnocken (11) aufnehmende Freisparung (14') ragenden Längssteg (26') zusammenwirkt.

8. Drucktaster nach Anspruch 7, dadurch gekennzeichnet, daß der Anschlag (18) aus einem achsparallel zu dem Zapfen (16) seitlich abstehenden Vorsprung gebildet ist und daß die die Rastnocken (11) aufnehmenden Freisparungen (17) zur Schaffung der Anschlagfläche (19) abgestuft sind.

9. Drucktaster nach Anspruch 1, dadurch gekennzeichnet, daß die Rastnocken (37) am Rande eines ein- oder mehrteiligen senkrecht zur Längsachse (A) des Drucktastergehäuses (33) dehnbaren Rahmens (35) ausgebildet sind.

10. Drucktaster nach Anspruch 9, dadurch gekennzeichnet, daß der Rahmen (35) eine in Richtung der Rastnase (37) federnde Zone (36) aufweist oder daß die Rastnasen (37) von einer senkrecht zur Längsachse (A) des Drucktasters wirkenden Federkraft (Feder 38) beaufschlagt sind.

11. Drucktaster nach einem der Ansprüche 1 bis 10, dadurch gekennzeichnet, daß das Tastelement (5) zur Verschiebung der Rastnocken (11 ; 35) durch die Ausnehmung (3) der Schalttafel (2) mit einer durch einen Absatz gebildeten Betätigungsfläche (20) versehen ist.

12. Drucktaster nach Anspruch 11, dadurch gekennzeichnet, daß die auf die sich in Richtung der Längsachse (A) des Drucktasters (1) erstreckenden Schenkel (13) der Rastnocken (11) enwirkende Betätigungsfläche (20) zur Längsachse (A) des Drucktasters (1) derart geneigt verläuft, daß die Rastnocken (11) nach dem Durchwandern der Ausnehmung (3) der Schalttafel (2) leicht radial ausschwenkbar sind.

13. Drucktaster nach einem oder mehreren der Ansprüche 1 bis 12, dadurch gekennzeichnet, daß die der Verstellbewegung des Tastenelementes (5) entgegenwirkende Feder als allen Rastnocken (11 ; 35) gemeinsame Druck- oder Blattfeder (15, 15' ; 24) ausgebildet ist, die sich am Drucktastergehäuse (4) abstützt.

14. Drucktaster nach Anspruch 13, dadurch gekennzeichnet, daß die Feder (15, 15') von der am Tastenelement (5) vorgesehenen in dem Betätigungsfläche (20) gebildeten Freiraum (21) angeordnet ist.

15. Drucktaster nach Anspruch 13 oder 14, dadurch gekennzeichnet, daß bei einem Drucktaster (1) mit verschwenkbar gelagerten Rastnocken (11) die auf diese einwirkende Feder (15, 15') unmittelbar oder über ein Zwischenglied (30) mit Abstand zu der Schwenkachse (Zapfen 16 ; Vorsprung 27) an den nach innen gerichteten Schenkeln (12) der Rastnocken (11) abgestützt ist.

16. Drucktaster nach einem der Ansprüche 1 bis 15, dadurch gekennzeichnet, daß bei einem Drehschalter die mit den Rastnocken (11) zusammenwirkende Betätigungsfläche (20') schraubenlinienförmig verlaufend ausgebildet ist.

17. Drucktaster nach einem der Ansprüche 1 bis 16, dadurch gekennzeichnet, daß zwischen dem Tastergehäuse (4) und der Schalttafel (2) auf deren Außenseite eine Dichtung (23) eingespannt ist.

## Claims

1. Push-button (1) for switchboards (2) comprising a push-button housing (4 ; 33) to be inserted into the switchboard (2) and to be connected therewith and for actuating contact members a push-button element (5) shiftable or turnable held in the push-button housing, whereby the push-button housing (4 ; 33) is provided with lock cams (11 ; 35) within limitations outwardly movable by spring loaded forces by catching the switchboard (2) from his back in order to mount the push-button (1), characterized in a design and arrangement of the lock cams (11 ; 35) at the push-button housing (4 ; 33) that following the insertion of the push-button housing (4 ; 33) into the opening (3) of the carrier board (2) the lock cams are shiftable through the opening (3) of the switchboard (2) opposite to the spring forces affecting on the lock cams longitudinally to the push-button housing (4 ; 33).

2. Push-button of claim 1, chraracterized, in that the lock cams (11) are shaped as a bent lever having two arms and being hingely mounted in its angle, and one arm (12) of which is inwardly directed is applied to a spring (15) commonly used for all lock cams and the other arm (13) of which may be locked with the switchboard (2).

3. Push-button of claim 1 or 2, characterized in that the lock cams (11) are shiftably inserted into an opening (14) directed parallel to the axis of the push-button housing (4).

4. Push-button of claim 3, characterized in that in order to bear hingely the lock cams (11) to same pins (16) are formed on one or two sides oriented perpendicular to the longitudinal axis (A) of the push-button (1) and that in the walls limiting the opening (14) longitudinal grooves (17) are provided in which the pins (16) may be shifted and swivelled.

5. Push-button of claim 3, characterized in that in order to bear hingely the lock cams (11) they are provided on one or two sides with two projections (27, 28) spaced each other and having convex surfaces on their facing sides between which a longitudinal ridge (26) engages the opening (14') which ridge is mounted to the push-button housing (4).

6. Push-button of one of the claims 2 through 5, characterized in that a perpendicular directed spring force (spring 25) is engaging the arms (13) of the lock cams (11) oriented in the longitudinal direction (A) of the push-button housing (1) (Fig. 1).

7. Push-button of one of the claims 3 through 6, charcterized in that in order to limit the swivel movement of the lock cams (11) each of them is provided with a stop (18 ; 9) co-operating with a stop surface (19) mounted to the push-button housing (4) or with a longitudinal ridge (26') projecting into the opening (14') surrounding the lock cams (11) respectively.

8. Push-button of claim 7, characterized in that the stop (18) is established by a lateral projection oriented parallel to the axis of the pin (16) and that the openings (17) taking over the lock cams (11) are stepped in order to define the stop surfaces (19).

9. Push-button of claim 1, characterized in that the lock cams (37) are located at the edges of a one-piece or multisectional extendable frame (35) perpendicular to the longitudinal axis (A) of the push-button housing (33).

10. Push-button of claim 9, characterized in that the frame (35) has an elastic region (36) directed towards the lock projections (37) or that the lock projections are engaged by a spring force (spring 38) perpendicularly oriented to the longitudinal axis (A) of the push-button.

11. Push-button of one of the claims 1 through 10, characterized in that the push-button element (5) used for shifting of the lock cams (11 ; 35) through the opening (3) of the switchboard (2) is provided with an acting surface (20) defined by a ledge.

12. Push-button of claim 11, characterized in that the acting surface (20) acting towards the arms (13) of the lock cams (11) aligned with the longitudinal axis (A) of the push-button is inclined to the longitudinal axis (A) of the push-button in that way that the lock cams (11) after having passed the opening (3) of the switchboard (2) may to some extend be swivelled radially.

13. Push-button of one or more of claims 1 through 12, characterized in that the spring acting against the movement of the push-button element (5) is shaped as a pressure or plate spring (15, 15' ; 24) commonly used for all of the lock cams (11 ; 35), which spring rests against the push-button housing (4).

14. Push-button of claim 13, characterized in that the spring (15, 15') is located within the space (21) limited by the acting surface (20) at the push-button element (5).

15. Push-button of one of the claims 13 or 14, characterized in that with a push-button (1) with hingely beared lock cams (11) the spring (15, 15') acting against the lock cams rests directly or via an intermediate part (30) to the inwardly directed arms (12) of the lock cams (11) apart from the axis of rotation (pin 16 ; projection 27).

16. Push-button of one of the claims 1 through 15, characterized in that with a rotary switch the acting surface (20') co-operating with the lock cams (20) is shaped as a helical curve.

17. Push-button of one of the claims 1 through 16, characterized in that between the push-button housing (4) and the switchboard (2) at its outside a sealing (23) is inserted.

## Revendications

1. Bouton-poussoir (1) pour tableaux de commande (2) comprenant un boîtier de bouton-poussoir (4 ; 33) à raccorder avec celui-ci, d'une conception (3) correspondante au tableau de commande (2) et un élément à touche (5) pour l'actionnement des éléments de contact se déplaçant ou tournant dans le boîtier du bouton-poussoir. A cet effet, le boîtier du bouton-poussoir (4 ; 33) est muni de cames de verrouillage (11 ; 35) qui sont limitées et déplaçables radialement vers l'extérieur sous la force du ressort et le saisir par l'arrière pour la fixation du bouton-poussoir (1) sur le tableau de commande (2), ainsi désigné, grâce à une configuration et une disposition telle des cames de verrouillage (11 ; 35) sur le boîtier du bouton-poussoir (4 ; 33), que celles-ci, après mise en place du boîtier du bouton-poussoir (4 ; 33) dans l'évidement (3) de la plaque-support (2) sont déplaçables par l'actionnement de l'élément à touche, contre une force du ressort agissant dans le sens longitudinal du boîtier du bouton-poussoir (4 ; 33), à l'aide de l'évidement (3) du tableau de commande (2).

2. Bouton-poussoir d'après le droit 1, ainsi désigné, de façon que les cames de verrouillage (11) sont conçues sous la forme d'un levier angulaire à deux branches qui est logé de façon pivotable dans la zone d'angle et dont la branche (12) dirigée vers l'intérieur est soumise à la force d'un ressort commun (15) de préférence de toutes les cames de verrouillage et dont l'autre branche (13) est verrouillable avec le tableau de commande (2).

3. Bouton-poussoir d'après le droit 1 ou 2, ainsi désigné, de façon que les cames de verrouillage (11) sont insérées, de façon déplaçable dans un axe parallèle, dans l'évidement (14) usiné dans le boîtier du bouton-poussoir (4).

4. Bouton-poussoir d'après le droit 3, ainsi désigné, de façon que les têtons (16) sont formés de un ou deux côtés pour le logement pivotant des cames de verrouillage (11) sur celui-ci par rapport à l'axe longitudinal vertical (A) du bouton-poussoir (1) et de façon que les parois limitantes des gorges longitudinales (17) sont usinées dans les évidements (14), dans lesquelles les têtons (16) sont maintenus de façon déplaçable et tournante.

5. Bouton-poussoir d'après le droit 3, ainsi désigné, de façon que les avancements (27, 28) disposés avec un écartement l'un part rapport à l'autre sont formés sur celui-ci pour le logement déplaçable des cames de verrouillage (11), ceux-ci présentant des faces convexes sur les côtés opposés, en prise entre le renfort longitudinal (26) dépassant dans l'évidement (14) formé sur le boîtier du poussoir (4).

6. Bouton-poussoir d'après un des droits 2 à 5, ainsi désigné, de façon que la branche (13) des cames de verrouillage (11) produise une force provoquée par le ressort (25) dans le sens longitudinal (A) du boîtier du bouton-poussoir (1) (figure 4).

7. Bouton-poussoir d'après un des droits 3 à 6, ainsi désigné, de façon qu'il soit placé une butée (18 ; 29) sur celui-ci, pour la limitation du mouvement de pivotement des cames de verrouillage (11) qui agit avec une face de butée (19) prévue sur le boîtier du bouton-poussoir (4) ou un renforcement longitudinal (26) dépassant dans l'évidement (14') supportant les cames de verrouillage (11).

8. Bouton-poussoir d'après le droit 7, ainsi désigné, de façon que la butée (18) est formée par un avancement dépassant latéralement sur un axe parallèle par rapport aux têtons (16) et que les évidements (17) supportant les cames de verrouillage (11) soient étagés pour la formation des faces de butée (19).

9. Bouton-poussoir d'après le droit 1, ainsi désigné, de façon que les cames de verrouillage (37) sont conçues sur le bord d'un cadre extensible (35) par rapport à un axe longitudinal (A) vertical sur un ou deux côtés du boîtier du bouton-poussoir (33).

10. Bouton-poussoir d'après le droit 9, ainsi désigné, de façon que le cadre (35) présente une zone élastique (36) dans le sens du nez de verrouillage (37) ou que les nez de verrouillage (37) soient soumis à la force du ressort (38) agissant verticalement par rapport à l'axe longitudinal (A) du bouton-poussoir.

11. Bouton-poussoir d'après un des droits 1 à 10, ainsi désigné, de façon que la touche (5) pour le déplacement des cames de verrouillage (11 ; 35) à travers le creux (3) du tableau de commande (2) soit conçue avec une face d'actionnement (20) formée par un talon.

12. Bouton-poussoir d'après le droit 11, ainsi désigné, de façon que la face d'actionement (20) agissant sur les branches (13) des cames de verrouillage (11) s'avançant das le sens de l'axe longitudinal (A) du bouton-poussoir (1) se développe en pente par rapport à l'axe longitudinal du bouton-poussoir (1) de façon que les cames de verrouillage (11) sont légèrement orientables radialement après l'avancement du creux (3) du tableau de commande (2).

13. Bouton-poussoir d'après un ou plusieurs des droits 1 à 12, ainsi désigné, de façon que le ressort agissant en sens inverse du mouvement de déplacement de la touche (5) comme toutes les cames de verrouillage (11 ; 35) est conçu en tant que ressort à cames ou ressort de pression (15, 15' ; 24) qui appuie sur le boîtier du bouton-poussoir (4).

14. Bouton-poussoir d'après le droit 13, ainsi désigné, de façon que le ressort (15, 15') est disposé dans l'espace libre (21) formé par la face d'actionnement (20) prévue sur la touche (5).

15. Bouton-poussoir d'après le droit 13 ou 14, ainsi désigné, de façon que pour un bouton-poussoir (1) avec cames de verrouillage pivotables à ressort (11), le ressort (15, 15') agissant sur celles-ci directement ou à l'aide d'un élément intermédiaire (30) avec écartement par rapport à l'axe de pivotement (téton 16 ; avancement 27) soit appuyé sur la branche (12), dirigée vers l'intérieur, des cames de verrouillage (11).

16. Bouton-poussoir d'après un des droits 1 à 15, ainsi désigné, de façon que pour un commutateur rotatif, la face d'actionnement (20') agissant avec les cames de verrouillage (11) soit conçue avec une forme développante hélicoïdale.

17. Bouton-poussoir d'après un des droits 1 à 16, ainsi désigné, de façon qu'un joint (23) soit monté entre le boîtier de la touche (4) et le tableau de commande (2), sur le côté extérieur.

8

FIG. 1

FIG. 2

FIG. 3

FIG. 5

# FIG. 4

FIG. 6

FIG. 7